# EUROPÄISCHE PATENTSCHRIFT

(11) **EP 4 049 443 B1**
(45) Veröffentlichungstag und Bekanntmachung des Hinweises auf die Patenterteilung: **17.07.2024**
(21) Anmeldenummer: 20789963.4
(22) Anmeldetag: 12.10.2020
(51) Int. Cl.: G02B 7/00, G02B 7/02, G02B 27/62, H04N 23/55, G02B 27/00, G02B 13/16

(54) **VERFAHREN ZUR HERSTELLUNG EINES KAMERAMODULS, KAMERAMODUL**
METHOD FOR PRODUCING A CAMERA MODULE, CAMERA MODULE
PROCÉDÉ DE FABRICATION D'UN MODULE DE CAMÉRA ET MODULE DE CAMÉRA

(30) Priorität: 23.10.2019 DE 102019216283
(43) Veröffentlichungstag der Anmeldung: 31.08.2022
(73) Patentinhaber: Robert Bosch GmbH, 70442 Stuttgart (DE)
(72) Erfinder: WINKLER, Moritz, 76337 Waldbronn (DE); BAUER, Nikolai, 71696 Moeglingen (DE); MOEHRLE, Andreas, 70806 Kornwestheim (DE)
(86) Internationale Anmeldenummer: PCT/EP2020/078536
(87) Internationale Veröffentlichungsnummer: WO 2021/078548

(56) Entgegenhaltungen:
- DE-A1- 102015 225 794
- US-A1- 2011 298 968
- US-A1- 2015 172 521
- US-A1- 2017 339 323
- US-A1- 2019 052 782

## Beschreibung

Die vorliegende Erfindung betrifft ein Verfahren zur Herstellung eines Kameramoduls mit den Merkmalen des Oberbegriffs des Anspruchs 1. Darüber hinaus betrifft die Erfindung ein Kameramodul mit den Merkmalen des Oberbegriffs des Anspruchs 6, das nach dem erfindungsgemäßen Verfahren des Anspruchs 1 oder dessen abhängiger Ansprüche hergestellt wurde.

### Stand der Technik

Kameramodule der eingangs genannten Art werden in einer Vielzahl unterschiedlicher Anwendungen eingesetzt. Beispielsweise können sie zur Umfeldüberwachung in stationären oder mobilen Sicherheitssystemen, beispielsweise in videobasierten Fahrerassistenzsystemen von Fahrzeugen, eingesetzt werden. Darüber hinaus können derartige Kameramodule in den unterschiedlichsten Konsumerprodukten zum Einsatz gelangen, beispielsweise in mobilen Endgeräten, wie beispielsweise Smartphones oder Tablets. Der Trend geht dabei zu möglichst einfach aufgebauten, kleinvolumigen Modulen. Wesentliche Bestandteile eines Kameramoduls der eingangs genannten Art sind ein Bildsensor und ein Objektiv mit mindestens einer Linse. Der Bildsensor ist in der Regel auf einem Träger angeordnet und zum Schutz vor äußeren Einwirkungen von einem Gehäuse umgeben. Bevor das Objektiv mit dem Träger oder Gehäuse verbunden werden kann, muss es in Bezug auf den Bildsensor aktiv ausgerichtet werden. Zur anschließenden Verbindung des Objektivs mit dem Träger oder Gehäuse werden in der Regel Klebe- oder Schweißverfahren eingesetzt, da hierüber zugleich die erforderliche Dichtheit herstellbar ist. Klebeverbindungen weisen jedoch mehrere Nachteile auf. Zu diesen gehört, dass die üblichen Klebstoffe durch Feuchtequellung und/oder Alterung ihre Materialeigenschaften ändern, so dass - je nach Umgebungsbedingung - eine über die Lebensdauer stabile Fokuslage des Objektivs kaum zu erreichen ist. Als nachteilig erweist sich zudem der üblicherweise hohe thermische Ausdehnungskoeffizient von Klebstoffen. Eine Schweißverbindung ist daher in der Regel einer Klebeverbindung vorzuziehen.

Eine Klebeverbindung ist beispielsweise der US 2011/ 0298968 A1 zu entnehmen, die sich auf ein System sowie ein Verfahren zum Ausrichten und Befestigen einer Linse bezieht.

Aus der US 2015/0172521 A1 geht eine Linseneinheit mit einem Linsenhalter hervor, der beispielsweise auf Drähten in einem Abstand zum Bildsensor gehalten sein kann.

Aus der US 2019/005278 A2 ist beispielsweise ein Kameramodul mit einem Objektiv, einem Linsenhalter, einem Bildsensor und einer gedruckten Leiterplatte bekannt. Bei der Montage des Kameramoduls werden das Objektiv und der Linsenhalter zueinander ausgerichtet und anschließend mit Hilfe von Schweißpunkten dauerhaft fixiert. Die Schweißpunkte werden mit Hilfe eines Lasers ausgeführt. Ferner wird vorgeschlagen, dass zwischen dem Objektiv und dem Linsenhalter ein Dichtelement angeordnet wird.

Die Herstellung einer Schweißverbindung setzt keine oder nur geringe Spaltmaße zwischen den Fügepartnern voraus. Ein mehrachsiges Ausrichten des Objektivs in Bezug auf den Bildsensor kann jedoch zu vergleichsweise großen Spaltmaßen führen, die eine Schweißverbindung nicht mehr zulassen.

Die vorliegende Erfindung soll hier Abhilfe schaffen. Insbesondere soll nach einem mehrachsigen Ausrichten des Objektivs in Bezug auf einen Bildsensor eine Lagefixierung mit Hilfe einer Schweißverbindung ermöglicht werden, und zwar unabhängig vom Spaltmaß zwischen den jeweiligen Fügepartnern. Auf diese Weise sollen eine robuste Verbindung und eine stabile Fokuslage erreicht werden.

Zur Lösung der Aufgabe werden das Verfahren mit den Merkmalen des Anspruchs 1 sowie das Kameramodul mit den Merkmalen des Anspruchs 6 angegeben. Vorteilhafte Ausführungsformen der Erfindung sind den jeweiligen Unteransprüchen zu entnehmen.

### Offenbarung der Erfindung

Bei dem vorgeschlagenen Verfahren zur Herstellung eines Kameramoduls wird ein Objektiv in Bezug auf einen Bildsensor ausgerichtet und anschließend durch Fügen mit einem den Bildsensor aufnehmenden Träger, einem den Bildsensor umgebenden Gehäuse oder einer zwischenliegenden Verbindungsstruktur als Fügepartner lagefixiert. Erfindungsgemäß wird das Objektiv auf zunächst noch beweglichen Abstandselementen gelagert und durch Bewegen der Abstandselemente in Bezug auf den Bildsensor ausgerichtet. Nach dem Ausrichten des Objektivs werden die Abstandselemente mit dem Objektiv und dem Fügepartner verschweißt.

Dadurch, dass die Abstandselemente einerseits mit dem Objektiv, andererseits mit dem jeweiligen Fügepartner des Objektivs verschweißt werden, wird eine Lagefixierung der Abstandselemente und des Objektivs erreicht. Das heißt, dass sich die Abstandselemente nach dem Verschweißen nicht weiterbewegen können und die eingestellte Fokuslage des Objektivs erhalten bleibt. Da die Schweißverbindung, insbesondere im Vergleich zur Klebeverbindung, weitgehend unempfindlich gegenüber Temperatur und Feuchtigkeit und damit besonders robust ist, wird zugleich eine besonders stabile Fokuslage des Objektivs erreicht.

Vor dem Verschweißen ermöglichen die zunächst noch beweglichen Abstandselemente ein mehrachsiges Ausrichten des Objektivs, vorzugsweise ein Ausrichten um drei translatorische und zwei rotatorische Achsen, so dass eine exakte Fokussierung des Objektivs möglich ist. Von Vorteil ist dabei, dass sich das Objektiv weitgehend frei bewegen kann, da kein direkter Kontakt zwischen dem Objektiv und dem Fügepartner besteht, sondern nur indirekt über die beweglichen Abstandselemente.

Bevorzugt werden bei der Herstellung des Kameramoduls Abstandselemente mit jeweils mindestens einer kugel-, teilkugel-, zylinder- oder teilzylinderförmigen Anlagekontur verwendet. Beispielsweise können Kugeln oder Rollen als Abstandselemente eingesetzt werden. Darüber hinaus können Stäbe mit lediglich endseitig teilkugel- oder teilzylinderförmigen Anlagekonturen als Abstandselemente verwendet werden. Über derart geformte Anlagekonturen wird ein punkt- oder linienförmiger Kontakt zwischen einem Abstandselement und einer am Objektiv oder am jeweiligen Fügepartner ausgebildeten Anlagefläche geschaffen. Der punkt- oder linienförmige Kontakt ermöglicht ein Abrollen des Abstandselements an der Anlagefläche, so dass das Ausrichten des Objektivs in Bezug auf den Bildsensor weiter vereinfacht wird.

Des Weiteren bevorzugt werden die Abstandselemente im gleichen Winkelabstand zueinander um eine vorzugsweise zylinderförmige oder konisch geformte Außenkontur des Objektivs angeordnet. Vorteilhafterweise beträgt die Anzahl der Abstandselemente drei, was maximale Freiheitsgrade bei einer zugleich sicheren Abstützung des Objektivs ermöglicht. Durch Abrollen in den punkt- oder linienförmigen Kontaktbereichen können die Abstandselemente alle zum Ausrichten erforderlichen Bewegungen des Objektivs mitmachen. Stabförmige Abstandselemente ändern dabei ihren Anstellwinkel. Ist die Außenkontur des Objektivs konisch geformt, ändert sich der Durchmesser, auf dem die punkt- oder linienförmigen Kontaktbereiche der Abstandselemente liegen.

Vorteilhafterweise werden die Abstandselemente über eine Führungsgeometrie, die durch den Träger oder durch das Gehäuse ausgebildet wird, geführt. Die Führung schränkt den Bewegungsraum der Abstandselemente im jeweiligen Kontaktbereich mit dem Träger oder dem Gehäuse ein, so dass die Abstandselemente kontrollierte Bewegungen ausführen. Die Führungsgeometrie kann derart ausgebildet sein, dass insbesondere eine seitliche Führung der Abstandselemente erreicht wird. Die Führungsgeometrie weist hierzu bevorzugt für jedes Abstandselement zwei parallellaufende Führungsflächen auf, die im Wesentlichen radial in Bezug auf das Objektiv angeordnet sind. Liegen die Abstandselemente an den Führungsflächen an, werden weitere punkt- oder linienförmige Kontaktbereiche geschaffen. Alternativ oder ergänzend kann die Führungsgeometrie eine Art Widerlager ausbilden. Die Führungsgeometrie gibt in diesem Fall den maximalen Durchmesser vor, auf dem die punkt- und/oder linienförmigen Kontaktbereiche der Abstandselemente mit dem Träger oder mit dem Gehäuse liegen. Zur Ausbildung eines Widerlagers für ein Abstandselement kann beispielsweise die Führungsgeometrie eine im Wesentlichen tangential in Bezug auf das Objektiv ausgerichtete Führungsfläche aufweisen, an welcher das Abstandselement abgestützt ist. In diesem Fall besteht auch ein punkt- oder linienförmiger Kontakt des Abstandselements mit der das Widerlager ausbildenden Führungsfläche.

Alternativ zu einer Führungsgeometrie, die durch den Träger oder durch das Gehäuse ausgebildet wird, können die Abstandselemente auch über die bereits erwähnte Verbindungsstruktur geführt werden, sofern eine solche vorgesehen ist. Bei der Verbindungsstruktur kann es sich beispielsweise um eine metallische Komponente des Trägers oder, sofern eine Leiterplatte als Träger verwendet wird, um eine Metallisierung der Leiterplatte handeln. Die Verbindungsstruktur kann auch ein auf dem Träger oder auf dem Gehäuse angeordneter metallischer Rahmen sein. Die Verwendung einer metallischen Verbindungsstruktur besitzt den Vorteil, dass die Schweißbarkeit der Verbindungsstruktur sichergestellt ist. Zur Führung der Abstandselemente kann die Verbindungsstruktur parallel verlaufende Seitenwände aufweisen, die im Wesentlichen radial in Bezug auf das Objektiv ausgerichtet sind, und/oder im Wesentlichen tangential in Bezug auf das Objektiv ausgerichtete Wände, die jeweils ein Widerlager für ein Abstandselement ausbilden.

Des Weiteren wird vorgeschlagen, dass die Abstandselemente über einen gemeinsamen Käfig geführt werden. Die Führung über den gemeinsamen Käfig kann alternativ oder ergänzend zu einer Führungsgeometrie oder einer Führung über die Verbindungsstruktur vorgesehen werden. Die Führung über den gemeinsamen Käfig besitzt den Vorteil, dass die Abstandselemente miteinander verbunden sind. Um die zum Ausrichten des Objektivs erforderlichen Bewegungen der Abstandselemente zuzulassen, kann der Käfig zumindest bereichsweise aus einem flexiblen oder elastisch verformbaren Material gefertigt sein. Der Käfig kann zudem mindestens ein Gelenk aufweisen, um eine Änderung des Anstellwinkels eines stabförmigen Abstellelements zuzulassen.

Das darüber hinaus zur Lösung der eingangs genannten Aufgabe vorgeschlagene Kameramodul umfasst ein Objektiv und einen Bildsensor, der auf einem Träger angeordnet und von einem Gehäuse umgeben ist.

Erfindungsgemäß ist das Objektiv auf Abstandselementen gelagert, die einerseits mit dem Objektiv andererseits mit dem Träger, dem Gehäuse oder einer zwischenliegenden Verbindungsstruktur stoffschlüssig verbunden sind.

Bei dem vorgeschlagenen Kameramodul ist demnach das Objektiv nicht unmittelbar, sondern mittelbar über die Abstandselemente mit dem jeweiligen Fügepartner verbunden. Die Abstandselemente überbrücken einen Spalt zwischen dem Objektiv und dem jeweiligen Fügepartner, so dass unabhängig vom Spaltmaß eine robuste Schweißverbindung herstellbar ist. Vor der Herstellung der Schweißverbindung ermöglichen die Abstandselemente zudem ein Ausrichten des Objektivs in Bezug auf den Bildsensor, und zwar nach dem zuvor beschriebenen erfindungsgemäßen Verfahren.

Ferner bevorzugt weisen die Abstandselemente jeweils mindestens eine kugel-, teilkugel-, zylinder- oder teilzylinderförmige Anlagekontur auf. Eine derartige Anlagekontur ermöglicht ein Abrollen auf einer Anlagefläche, so dass die Abstandselemente vor dem Verschweißen mit dem Objektiv und dem jeweiligen Fügepartner alle zum Ausrichten des Objektivs erforderlichen Bewegungen mitmachen können.

Gemäß einer bevorzugten Ausführungsform der Erfindung sind die Abstandselemente im gleichen Winkelabstand zueinander um eine vorzugsweise zylinderförmige oder konisch geformte Außenkontur des Objektivs angeordnet. Das Objektiv ist somit über den Umfang gleichmäßig abgestützt, was eine stabile Fokuslage des Objektivs unterstützt. Die Anzahl der Abstandselemente beträgt dabei bevorzugt drei, da drei Abstandselemente eine sichere Abstützung aber auch größtmögliche Freiheitsgrade beim Ausrichten des Objektivs während der Herstellung des Kameramoduls ermöglichen.

Des Weiteren wird vorgeschlagen, dass die Abstandselemente zumindest abschnittsweise in einer Führungsgeometrie und/oder in einem gemeinsamen Käfig aufgenommen sind. Die Führung der Abstandselemente soll insbesondere das Ausrichten des Objektivs bei der Herstellung des Kameramoduls vereinfachen. Bei dem fertigen Kameramodul kann über die Führungsgeometrie und/oder den Käfig eine zusätzliche Abstützung der Abstandselemente erreicht werden, so dass die Stabilität der Fokuslage weiter steigt. Die Führung besitzt demnach Vorteile, die nicht nur bei der Herstellung des Kameramoduls zum Vorschein treten.

In Weiterbildung der Erfindung wird vorgeschlagen, dass zwischen dem Objektiv und dem Träger, zwischen dem Objektiv und dem Gehäuse oder zwischen dem Objektiv und der Verbindungsstruktur, ein Dichtelement angeordnet ist. Das Dichtelement dient primär der Abschottung des optisch relevanten Bereichs vor Schmutzeintrag. Insbesondere soll der Bildsensor vor Verschmutzung geschützt werden. Idealerweise ist daher das Dichtelement ein Dichtring, der eine umlaufende Abschottung bzw. Abdichtung ermöglicht.

Das vorgeschlagene erfindungsgemäße Kameramodul ist erfindungsgemäß nach dem zuvor beschriebenen erfindungsgemäßen Verfahren hergestellt worden, da dieses ein mehrachsiges Ausrichten des Objektivs ermöglicht und eine stabile Fokuslage durch das anschließende Verschweißen der Abstandselemente mit dem Objektiv und dem jeweiligen Fügepartner gewährleistet.

Das vorgeschlagene Kameramodul kann auch ein Imagermodul sein. Insoweit wird zwischen einem Kameramodul und einem Imagermodul nicht unterschieden.

Der Träger, auf dem der Bildsensor angeordnet ist, ist vorzugsweise fest mit dem Gehäuse bzw. dem Linsenhalter verbunden, beispielsweise verschraubt, verklebt, verlötet oder verschweißt. Bei dem Träger kann es sich insbesondere um eine Leiterplatte handeln.

Bevorzugte Ausführungsformen der Erfindung werden nachfolgend anhand der beigefügten Zeichnungen näher erläutert. Diese zeigen:

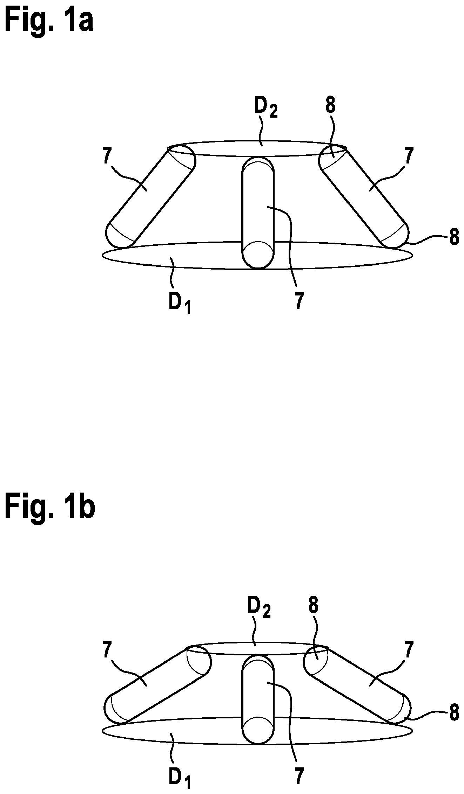

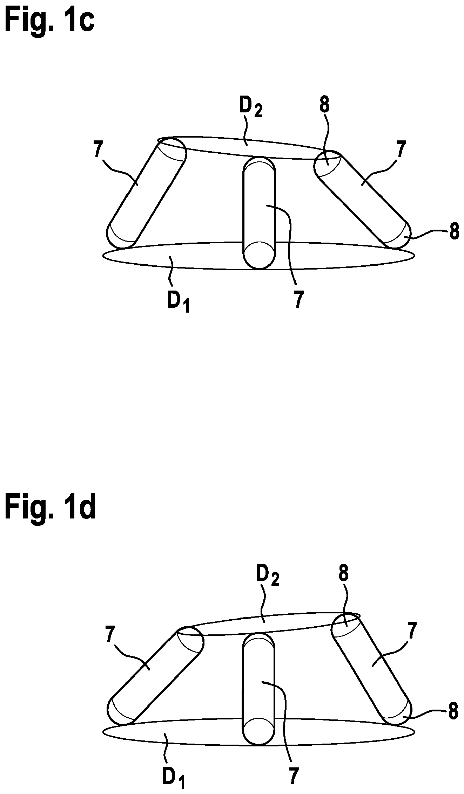

- Fig. 1: perspektivische Darstelllungen unterschiedlicher Abstandselemente für ein erfindungsgemäßes Kameramodul, a) Stäbe mit rundem Querschnitt und teilkugelförmigen Enden, b) Stäbe mit rechteckigem Querschnitt und teilzylinderförmigen Enden, c) Kugeln und d) Rollen,
- Fig. 1: a)-d) perspektivische Darstellungen stabförmiger Abstandselemente für ein erfindungsgemäßes Kameramodul in unterschiedlichen Stellungen,
- Fig. 2: a)-d) perspektivische Darstellungen unterschiedlicher Abstandselemente für ein erfindungsgemäßes Kameramodul,
- Fig. 3: a) eine perspektivische Darstellung und b) eine Schnittansicht einer ersten bevorzugten Ausführungsform eines erfindungsgemäßen Kameramoduls,
- Fig. 4: a) eine perspektivische Darstellung und b) eine Schnittansicht einer zweiten bevorzugten Ausführungsform eines erfindungsgemäßen Kameramoduls,
- Fig. 5: a) eine perspektivische Darstellung und b) eine Schnittansicht einer dritten bevorzugten Ausführungsform eines erfindungsgemäßen Kameramoduls,
- Fig. 6: a) eine perspektivische Darstellung und b) eine Schnittansicht einer vierten bevorzugten Ausführungsform eines erfindungsgemäßen Kameramoduls, und
- Fig. 7: a) eine perspektivische Darstellung und b) eine Schnittansicht einer fünften bevorzugten Ausführungsform eines erfindungsgemäßen Kameramoduls.

### Ausführliche Beschreibung der Zeichnungen

Ein erfindungsgemäßes Kameramodul 1 weist Abstandselemente 7 auf, die ein mehrachsiges Ausrichten eines Objektivs 2 gegenüber einem Bildsensor 3 ermöglichen. Anhand der Fig. 1 wird zunächst die Funktionsweise dieser Abstandselemente 7 erläutert.

In der Fig. 1a sind drei stabförmige Abstandselemente 7 mit kreisrundem Querschnitt und teilkugelförmigen Enden dargestellt, wobei die Enden Anlagekonturen 8 ausbilden. Die drei Abstandselemente 7 sind entlang einer Kreislinie mit einem Durchmesser D₁ aufgestellt und jeweils nach innen geneigt, so dass die oberen Anlagekonturen 8 auf einer gemeinsamen Kreislinie mit einem Durchmesser D₂ liegen. Diese Kreislinie markiert den Kontaktbereich der Abstandselemente 7 mit einer Außenkontur 9 des Objektivs 2.

Da die Anlagekonturen 8 jeweils teilkugelförmig ausgebildet sind, besteht jeweils ein punktförmiger Kontakt der Abstandselemente 7 mit der Außenkontur 9 des Objektivs 2 einerseits und der Aufstellfläche andererseits. Die teilkugelförmigen Enden bilden demnach Anlagekonturen 8 aus, über welche die Abstandselemente 7 an der jeweiligen Anlagefläche abrollen können. Dies ermöglicht ein Ändern der Anstellwinkel der Abstandselemente 7, um das Objektiv 2 mehrachsig auszurichten.

Wie beispielhaft in der Fig. 1b dargestellt kann zur Verringerung des Abstands zwischen Objektiv 2 und Bildsensor 3 der Anstellwinkel der Abstandselemente 7 verkleinert werden. Da vorliegend der Durchmesser D₁ in seinen äußeren Grenzen definiert ist, ändert sich im Wesentlichen nur der Durchmesser D₂.

Um das Objektiv 2 in eine leichte Kipplage zu bringen, können - wie beispielhaft in der Fig. 1c und der Fig. 1d dargestellt -die Abstandselemente 7 auch unterschiedlich stark geneigt werden. Die Abstandselemente 7 folgen dabei der Bewegung des Objektivs 2 beim Ausrichten.

In den Fig. 1c und 1d weist der Durchmesser D₂ am Objektiv 2 keine exakte Kreisform, sondern eine elliptische Form auf, was vorliegend jedoch vernachlässigt wird.

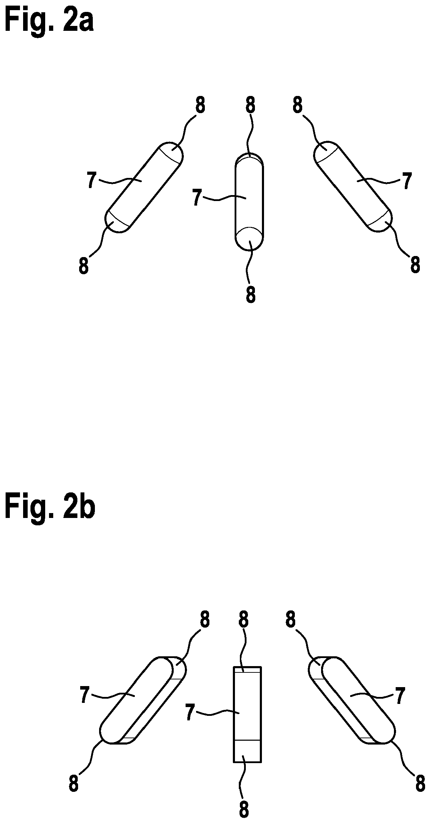

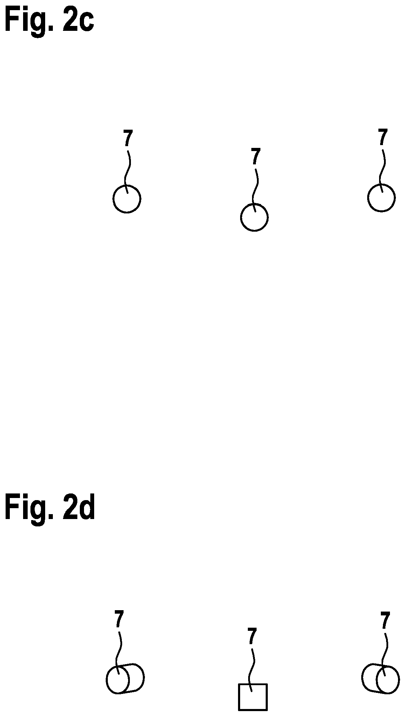

Der Fig. 2 sind alternative Abstandselemente 7 zu entnehmen. Fig. 2a zeigt die bereits aus der Fig. 1 bekannten stabförmigen Abstandselemente 7 mit kreisrundem Querschnitt und teilkugelförmigen Anlagekonturen 8. Fig. 2b zeigt ebenfalls stabförmige Abstandselemente 7, jedoch mit rechteckigem Querschnitt und teilzylinderförmigen Anlagekonturen 8. Fig. 2c zeigt kugelförmige Abstandselemente 7 und Fig. 2d zeigt rollenartige Abstandselemente 7. Die Einsatzmöglichkeiten der unterschiedlichen Abstandselemente 7 werden nachfolgend anhand konkreter Ausführungsbeispiele näher erläutert.

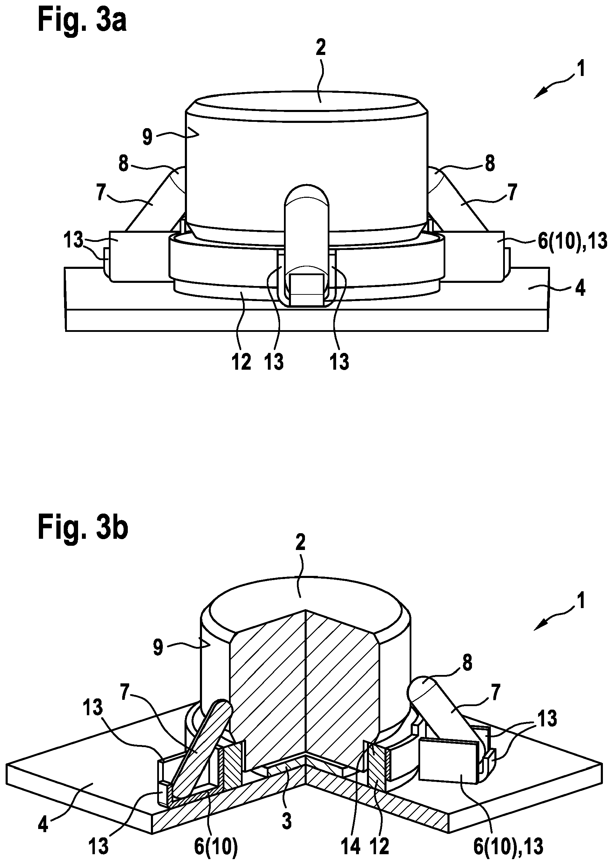

Den Figuren 3a und 3b ist ein erstes erfindungsgemäßes Kameramodul 1 mit einem Objektiv 2 und einem Bildsensor 3 zu entnehmen. Der Bildsensor 3 ist auf einem Träger 4 angeordnet, bei dem es sich vorliegend um eine Leiterplatte handelt, über welche die notwendigen elektrischen Kontakte des Bildsensors 3 hergestellt sind. Das Objektiv 2 ist in einem Abstand oberhalb des Bildsensors 3 platziert und über drei stabförmige Abstandselemente 7 gemäß der Fig. 1a gelagert. Im Unterschied zur Fig. 1a liegen die Abstandselemente 7 über ihre Anlagekonturen 8 außenumfangseitig und nicht stirnseitig am Objektiv 2 an. Dies hat den Effekt, dass nicht der Durchmesser D₂ veränderbar ist, sondern der Durchmesser D₁. Ändert sich beim Ausrichten des Objektivs 2 der Anstellwinkel der Abstandselemente 7, ändert sich zugleich der Durchmesser D₁.

In den Figuren 3a und 3b sind die Abstandselemente 7 nicht unmittelbar auf dem Träger 4 abgestützt, sondern mittelbar über eine auf dem Träger 4 angeordneten Verbindungsstruktur 6. Diese ist aus einem metallischen Material gefertigt, so dass die Abstandselemente 7, die ebenfalls aus einem metallischen Material gefertigt sind, nach dem Ausrichten des Objektivs 2 mit der Verbindungsstruktur 6 verschweißt werden können. Auf diese Weise wird eine Lagefixierung des Objektivs 2 erreicht. Da die Schweißverbindung besonders robust ist, wird zugleich eine stabile Fokuslage des Objektivs 2 erreicht.

Die metallische Verbindungsstruktur 6 dient bei der in den Figuren 3a und 3b dargestellten Ausführungsform zugleich als Führungsgeometrie 10, über welche die Abstandselemente 7 während des Ausrichtens des Objektivs 2 geführt sind. Die Führungsgeometrie 10 weist hierzu hochgestellte Seitenwände 13 auf, die parallel zu einer Radialen sowie parallel zu einer Tangente in Bezug auf das Objektiv 2 verlaufen. Die parallel zur Tangente verlaufenden Seitenwände 13 bilden jeweils ein Widerlager für die Abstandselemente 7 aus, so dass der maximale Durchmesser D₁ vorgegeben ist.

Bei dem in den Figuren 3a und 3b dargestellten Ausführungsbeispiel ist zwischen dem Objektiv 2 und dem Träger 4 zusätzlich ein ringförmiges Dichtelement 12 angeordnet. Da dieses aus einem elastisch verformbaren Material gefertigt ist, kann es die Bewegungen des Objektivs 2 beim Ausrichten mitmachen. Das Dichtelement 12 umgibt vorliegend einen Endabschnitt des Objektivs 2, das einen verringertem Außendurchmesser aufweist, so dass ein ringförmiger Absatz 14 ausgebildet wird, an dem das Dichtelement 12 dicht anschließt.

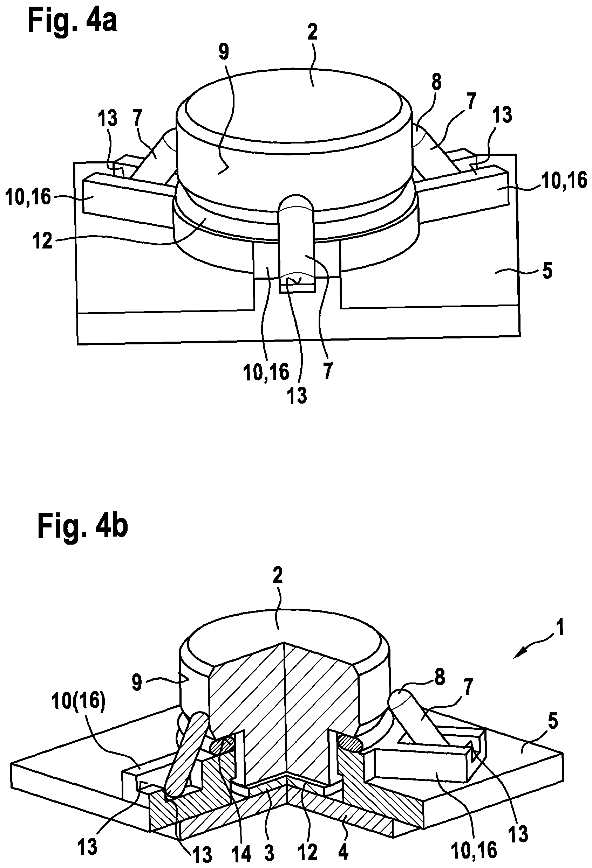

Eine zweite bevorzugte Ausführungsform eines erfindungsgemäßen Kameramoduls 1 ist in den Figuren 4a und 4b dargestellt. Hier ist das Objektiv 2 über die Abstandselemente 7 nicht auf dem Träger 4, sondern auf einem Gehäuse 5 abgestützt. Der Träger 4 ist mit dem Gehäuse 5 fest verbunden. Die Ausbildung des Objektivs 2 und die der Anstandselemente 7 entspricht im Wesentlichen der der Figuren 3a und 3b. Ein Dichtelement 12 zwischen dem Objektiv 2 und dem Gehäuse 5 ist ebenfalls vorgesehen, wobei das Dichtelement 12 auf einem hohlzylinderförmigen Ansatz 15 des Gehäuses 5 angeordnet ist.

Von dem hohlzylinderförmigen Ansatz 15 erstrecken sich Abschnitte 16 einer Führungsgeometrie 10 nach radial außen. Die Führungsgeometrie 10 ist demnach in das Gehäuse 5 integriert. Die Anzahl der Abschnitte 16 entspricht der Anzahl der Abstandselemente 7. Jeder Abschnitt 16 weist zwei parallel zu einer Radialen verlaufende Seitenwände 13 sowie eine parallel zu einer Tangente verlaufende Seitenwand 13 auf. Letztere bildet ein Widerlager aus, so dass der Durchmesser D₁ nach außen begrenzt ist. Der Durchmesser D₂ ist durch das Objektiv 2 vorgegeben, da auch hier die Abstandselemente 7 außenumfangseitig an der zylinderförmigen Außenkontur 9 des Objektivs 2 anliegen.

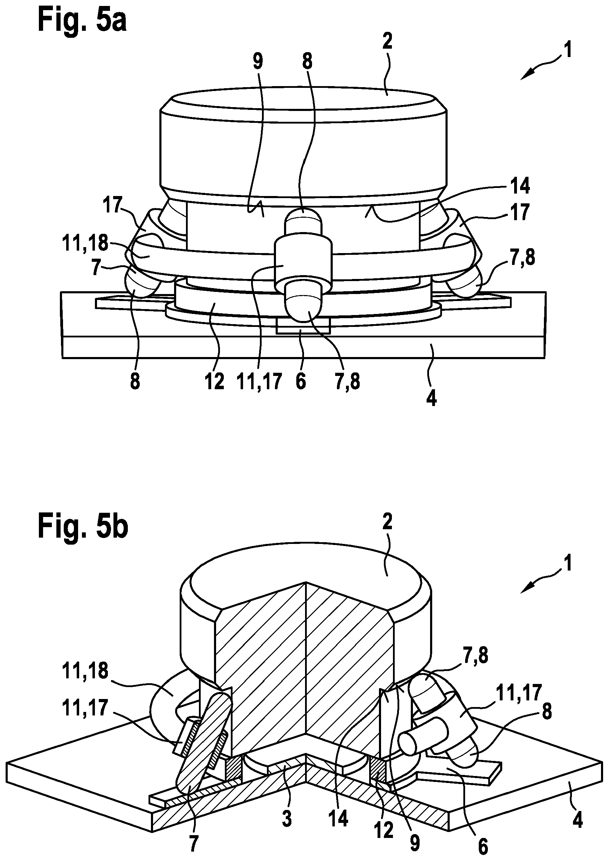

Dies ist bei dem in den Figuren 5a und 5b dargestellten Kameramodul 1 anders. Hier weist das Objektiv 2 im Bereich des Absatzes 14 eine konisch geformte Außenkontur 9 auf, an der die Abstandselemente 7 anliegen. Das heißt, dass je nach Lage des Abstandselemente 7 an der konischen Außenkontur 9 des Objektivs 2 der Durchmesser D₂ veränderbar ist. Da andernends die Abstandselemente 7 auch nicht über eine Führungsgeometrie 10 geführt sind, kann auch der Durchmesser D₁ verändert werden. Zugleich wird eine Führung der Abstandselemente 7 über einen Käfig 11 erreicht, in dem die Abstandselemente 7 beweglich gelagert sind. Der Käfig 11 weist hierzu hülsenförmige Aufnahmen 17 auf, die über einen Ring 18 verbunden und jeweils drehbeweglich gelagert sind, so dass der Käfig 11 eine Änderung der Anstellwinkel der Abstandselemente 7 zulässt.

Die Abstandselemente 7 sind an ihren Fußpunkten mittelbar über eine metallische Verbindungsstruktur 6 auf dem Träger 5 abgestützt. Zur Lagefixierung des Objektivs 2 werden die Abstandselemente 7 mit der Verbindungsstruktur 6 einerseits und mit der Außenkontur 9 des Objektivs 2 andererseits versschweißt. Das Dichtelement 12 ist vorliegend zwischen dem Objektiv 2 und der Verbindungsstruktur 6 angeordnet.

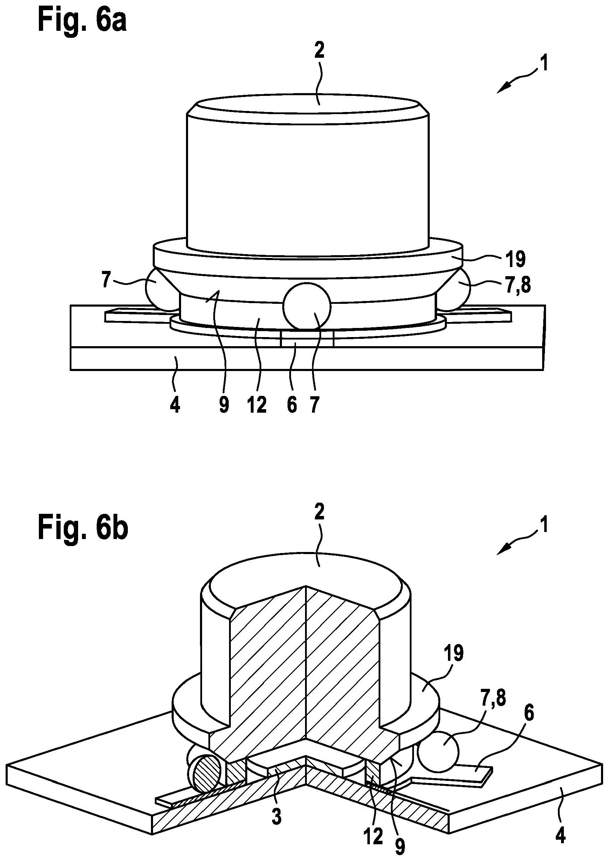

Eine weitere bevorzugte Ausführungsform eines erfindungsgemäßen Kameramoduls 1 ist in den Figuren 6a und 6b dargestellt. Die Abstandselemente 7 sind hier kugelförmig ausgeführt und liegen an einer konisch geformten Außenkontur 9 des Objektivs 2 an. Die konisch geformte Außenkontur 9 ist vorliegend an einem ringförmigen Bundabschnitt 19 des Objektivs 2 ausgebildet. Die kugelförmigen Abstandselemente 7 rollen auf einer metallischen Verbindungsstruktur 6, die auf einem Träger 4 angeordnet ist und ein Verschweißen der Abstandselemente 7 nach dem Ausrichten des Objektivs 2 ermöglichen. Das Dichtelement 12 ist zwischen dem Objektiv 2 und der Verbindungsstruktur 6 angeordnet.

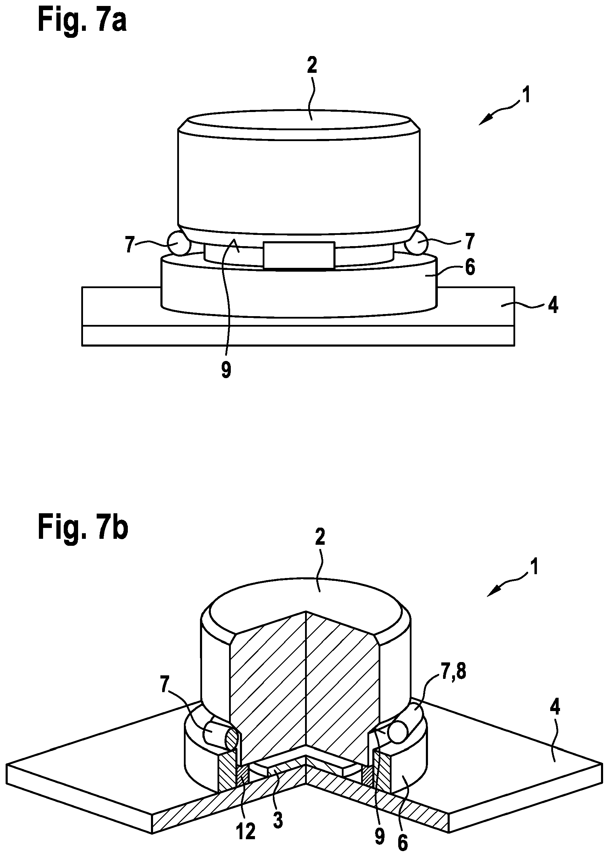

Anstelle kugelförmiger Abstandselemente 7 können auch rollenartige Abstandselemente 7 verwendet werden. Eine entsprechende Ausführungsform ist in den Figuren 7a und 7b beispielhaft dargestellt. Das Objektiv 2 ist analog dem der Figuren 6a und 6b ausgeführt, so dass die Rollen an einer konisch geformten Außenkontur 9 des Objektivs 2 anliegen. Der Außenkontur 9 des Objektivs 2 liegt eine metallische Verbindungsstruktur 6 gegenüber, die auf dem Träger 4 angeordnet ist. Die Verbindungsstruktur 6 ist als Ring ausgeführt, auf dem die rollenartigen Abstandselemente 7 abrollen, wenn das Objektiv 2 ausgerichtet wird. Nach dem Ausrichten werden die Abstandselemente 7 mit der Verbindungsstruktur 6 verschweißt. Das Dichtelement 12 ist zwischen dem Objektiv 2 und dem Träger 4 angeordnet.

Neben den dargestellten Ausführungsbeispielen sind eine Vielzahl weiterer Ausführungsformen möglich.

Grundsätzlich gilt, dass Abstandselemente 7, die gemäß der Figuren 6a, 6b, 7a und 7b kugelförmig oder rollenartig ausgebildet sind, eine konisch geformte Anlagefläche erfordern, um den Bewegungen des Objektivs 2 beim Ausrichten folgen zu können. Die konisch geformte Anlagefläche kann wahlweise durch die Außenkontur 9 des Objektivs 2 oder eine konisch geformte Anlagefläche des Gehäuses 5, des Trägers 4 oder der Verbindungsstruktur 6 gebildet werden. Bei stabförmigen Abstandselementen 7 kann die Außenkontur 9 des Objektivs 2 auch zylinderförmig ausgebildet sein, da stabförmige Abstandselemente 7 ihren Anstellwinkel ändern können, wenn zumindest ein Durchmesser D₁ und/oder D₂ variabel sind.

## Patentansprüche

1. Verfahren zur Herstellung eines Kameramoduls (1), bei dem ein Objektiv (2) in Bezug auf einen Bildsensor (3) ausgerichtet und anschließend durch Fügen mit einem den Bildsensor (3) aufnehmenden Träger (4), einem den Bildsensor (3) umgebenden Gehäuse (5) oder einer zwischenliegenden Verbindungsstruktur (6) als Fügepartner lagefixiert wird,
**dadurch gekennzeichnet, dass** das Objektiv (2) auf zunächst noch beweglichen Abstandselementen (7) gelagert und durch Bewegen der Abstandselemente (7) in Bezug auf den Bildsensor (3) ausgerichtet wird und nach dem Ausrichten des Objektivs (2) die Abstandselemente (7) mit dem Objektiv (2) und dem Fügepartner (4, 5, 6) verschweißt werden.

2. Verfahren nach Anspruch 1, wobei Abstandselemente (7) mit jeweils mindestens einer kugel-, teilkugel-, zylinder- oder teilzylinderförmigen Anlagekontur (8) verwendet werden.

3. Verfahren nach Anspruch 1 oder 2, wobei die Abstandselemente (7) im gleichen Winkelabstand zueinander um eine vorzugsweise zylinderförmige oder konisch geformte Außenkontur (9) des Objektivs (2) angeordnet werden.

4. Verfahren nach einem der vorhergehenden Ansprüche, wobei die Abstandselemente (7) über eine Führungsgeometrie (10), die durch den Träger (4) oder durch das Gehäuse (5) ausgebildet wird, oder über die Verbindungsstruktur (6) geführt werden.

5. Verfahren nach einem der vorhergehenden Ansprüche, wobei die Abstandselemente (7) über einen gemeinsamen Käfig (11) geführt werden.

6. Kameramodul (1), umfassend ein Objektiv (2) und einen Bildsensor (3), der auf einem Träger (4) angeordnet und von einem Gehäuse (5) umgeben ist, wobei das Objektiv (2) auf Abstandselementen (7) gelagert ist, die einerseits mit dem Objektiv (2) andererseits mit dem Träger (4), dem Gehäuse (5) oder einer zwischenliegenden Verbindungsstruktur (6) verschweißt sind, **dadurch gekennzeichnet, dass** das Kameramodul (1) nach einem Verfahren nach einem der Ansprüche 1 bis 5 hergestellt worden ist.

7. Kameramodul (1) nach Anspruch 6, wobei die Abstandselemente (7) jeweils mindestens eine kugel-, teilkugel-, zylinder- oder teilzylinderförmige Anlagekontur (8) aufweisen.

8. Kameramodul (1) nach Anspruch 6 oder 7, wobei die Abstandselemente (7) im gleichen Winkelabstand zueinander um eine vorzugsweise zylinderförmige oder konisch geformte Außenkontur (9) des Objektivs (2) angeordnet sind.

9. Kameramodul (1) nach einem der Ansprüche 6 bis 8, wobei die Abstandselemente (7) zumindest abschnittsweise in einer Führungsgeometrie (10) und/oder in einem gemeinsamen Käfig (11) aufgenommen sind.

10. Kameramodul (1) nach einem der Ansprüche 6 bis 9, wobei ein Dichtelement (12), vorzugsweise ein Dichtring, zwischen dem Objektiv (2) und dem Träger (4), dem Objektiv (2) und dem Gehäuse (5) oder dem Objektiv (2) und der Verbindungsstruktur (6) angeordnet ist.

## Claims

1. Method for producing a camera module (1), wherein an objective (2) is aligned with respect to an image sensor (3) and is then fixed in position by being joined to a carrier (4) holding the image sensor (3), a housing (5) surrounding the image sensor (3) or a connecting structure (6) located there-between as a part to be joined,
**characterized in that** the objective (2) is supported on spacer elements (7) which are initially still movable and is aligned with respect to the image sensor (3) by moving the spacer elements (7) and, after the objective (2) has been aligned, the spacer elements (7) are welded to the objective (2) and to the part to be joined (4, 5, 6).

2. Method according to Claim 1,
wherein spacer elements (7) with in each case at least one spherical, partially spherical, cylindrical or partially cylindrical contact contour (8) are used.

3. Method according to Claim 1 or 2,
wherein the spacer elements (7) are arranged at equal angular spacings with respect to one another around a preferably cylindrical or conical outer contour (9) of the objective (2).

4. Method according to any of the preceding claims,
wherein the spacer elements (7) are guided via a guidance geometry (10), which is formed by the carrier (4) or by the housing (5), or via the connecting structure (6).

5. Method according to any of the preceding claims, wherein the spacer elements (7) are guided via a common cage (11).

6. Camera module (1) comprising an objective (2) and an image sensor (3), which is arranged on a carrier (4) and is surrounded by a housing (5), wherein the objective (2) is supported on spacer elements (7) which are welded to the objective (2) on one side and to the carrier (4), the housing (5) or a connecting structure (6) located there-between on the other side,
**characterized in that** the camera module (1) has been produced in accordance with a method according to any of Claims 1 to 5.

7. Camera module (1) according to Claim 6,
wherein the spacer elements (7) have in each case at least one spherical, partially spherical, cylindrical or partially cylindrical contact contour (8).

8. Camera module (1) according to Claim 6 or 7, wherein the spacer elements (7) are arranged at equal angular spacings with respect to one another around a preferably cylindrical or conical outer contour (9) of the objective (2).

9. Camera module (1) according to any of Claims 6 to 8,
wherein the spacer elements (7) are held at least partially in a guidance geometry (10) and/or in a common cage (11).

10. Camera module (1) according to any of Claims 6 to 9,
wherein a sealing element (12), preferably a sealing ring, is arranged between the objective (2) and the carrier (4), the objective (2) and the housing (5), or the objective (2) and the connecting structure (6).

## Revendications

1. Procédé de fabrication d'un module de caméra (1), dans lequel un objectif (2) est aligné par rapport à un capteur d'image (3) et est ensuite fixé en position par assemblage à un support (4) recevant le capteur d'image (3), un boîtier (5) entourant le capteur d'image (3) ou une structure de liaison intermédiaire (6) étant fixée en position en tant que partie associée d'assemblage,
**caractérisé en ce que** l'objectif (2) est monté sur des éléments d'espacement (7) encore mobiles dans un premier temps et est aligné par rapport au capteur d'image (3) par déplacement des éléments d'espacement (7) et, après l'alignement de l'objectif (2), les éléments d'espacement (7) sont soudés à l'objectif (2) et à la partie associée d'assemblage (4, 5, 6).

2. Procédé selon la revendication 1,
dans lequel des éléments d'espacement (7) ont chacun au moins un contour de contact (8) de forme sphérique, partiellement sphérique, cylindrique ou partiellement cylindrique sont utilisés.

3. Procédé selon la revendication 1 ou 2,
dans lequel les éléments d'espacement (7) sont disposés à la même distance angulaire les uns des autres autour d'un contour extérieur (9), de préférence cylindrique ou de forme conique, de l'objectif (2).

4. Procédé selon l'une des revendications précédentes, dans lequel les éléments d'espacement (7) sont guidés par une géométrie de guidage (10) formée par le support (4) ou par le boîtier (5), ou par la structure de liaison (6) .

5. Procédé selon l'une des revendications précédentes, dans lequel les éléments d'espacement (7) sont guidés par une cage commune (11).

6. Module de caméra (1) comprenant un objectif (2) et un capteur d'image (3) disposé sur un support (4) et entouré par un boîtier (5), l'objectif (2) étant monté sur des éléments d'espacement (7) soudés d'une part à l'objectif (2) d'autre part au support (4), au boîtier (5) ou à une structure de liaison intermédiaire (6), **caractérisé en ce que** le module de caméra (1) a été fabriqué selon un procédé selon l'une des revendications 1 à 5.

7. Module de caméra (1) selon la revendication 6, dans lequel les éléments d'espacement (7) présentent chacun au moins un contour de contact (8) de forme sphérique, partiellement sphérique, cylindrique ou partiellement cylindrique.

8. Module de caméra (1) selon la revendication 6 ou la revendication 7,
dans lequel les éléments d'espacement (7) sont disposés à la même distance angulaire les uns des autres autour d'un contour extérieur (9), de préférence cylindrique ou de forme conique, de l'objectif (2).

9. Module de caméra (1) selon l'une des revendications 6 à 8,
dans lequel les éléments d'espacement (7) sont logés au moins par sections dans une géométrie de guidage (10) et/ou dans une cage commune (11).

10. Module de caméra (1) selon l'une des revendications 6 à 9,
dans lequel un élément d'étanchéité (12), de préférence une bague d'étanchéité, est disposé entre l'objectif (2) et le support (4), l'objectif (2) et le boîtier (5) ou l'objectif (2) et la structure de liaison (6).
